Europäisches Patentamt

European Patent Office

Office européen des brevets

(19)

(11) Numéro de publication : **0 296 032 B1**

(12) **FASCICULE DE BREVET EUROPEEN**

(45) Date de publication du fascicule du brevet :
24.07.91 Bulletin 91/30

(21) Numéro de dépôt : **88401409.3**

(22) Date de dépôt : **09.06.88**

(51) Int. Cl.⁵ : **F23D 14/24,** F23L 15/04,
F23M 11/04

(54) Système à brûleur notamment à grande vitesse de sortie des gaz brûlés.

(30) Priorité : **11.06.87 FR 8708147**

(43) Date de publication de la demande :
**21.12.88 Bulletin 88/51**

(45) Mention de la délivrance du brevet :
**24.07.91 Bulletin 91/30**

(84) Etats contractants désignés :
**AT BE CH DE ES FR GB GR IT LI NL SE**

(56) Documents cités :
**EP-A- 0 164 576**
**EP-A- 0 191 910**
**DE-A- 2 243 604**
**DE-A- 2 336 693**
**DE-A- 2 940 245**
**GB-A- 1 099 232**
**GB-A- 2 175 684**

(56) Documents cités :
**US-A- 2 478 732**
**US-A- 4 021 186**
**US-A- 4 104 017**
**US-A- 4 525 138**

(73) Titulaire : **GAZ DE FRANCE**
**23, rue Philibert Delorme**
**F-75017 Paris (FR)**

(72) Inventeur : **Cassagne, Jean-Pierre**
**8bis Villa du Châtelet**
**F-94120 Fontenay Sous Bois (FR)**
Inventeur : **Scrive Laurent**
**2bis rue Rebeval**
**F-75019 Paris (FR)**

(74) Mandataire : **Berger, Helmut et al**
**Cabinet Z. WEINSTEIN 20, avenue de**
**Friedland**
**F-75008 Paris (FR)**

Jouve, 18, rue Saint-Denis, 75001 PARIS

## Description

L'invention concerne un système à brûleur notamment à grande vitesse de sortie des gaz brûlés, tel que défini dans le préambule de la revendication principale.

Un tel système à brûleur est connu par le document EP-A-0 164 576. Dans le système à brûleur décrit dans ce document, le moyen d'assemblage est formé par un organe en forme d'un soufflet qui est interposé axialement entre le conduit d'amenée de gaz à la chambre de combustion et une surface d'appui solidaire de l'enveloppe du brûleur.

Ce mode de réalisation du moyen d'assemblage a pour inconvénient majeur qu'il faut prévoir des moyens d'étanchéité au niveau des jonctions de l'organe de soufflet au conduit d'amenée de gaz et à la surface d'enveloppe et que la stabilité de l'assemblage est critique dans la mesure où la force axiale est transmise du couvercle au conduit d'amenée de gaz par le soufflet. La structure du brûleur connu nécessite donc des mesures constructives, supplémentaires et relativement complexes pour assurer une sécurité satisfaisante du brûleur.

La présente invention a pour but de proposer une structure de brûleur qui ne présente pas les inconvénients du brûleur connu, qui vient d'être énoncé.

Pour atteindre ce but, il est proposé trois modes de réalisation d'un système à brûleur. Le problème de l'invention est résolu grâce aux mesures constructives décrites dans les parties caractérisantes des revendications 1 à 3, chaque revendication concernant un des trois modes de réalisation.

L'invention sera mieux comprise, et d'autres buts, caractéristiques, détails et avantages de celle-ci apparaîtront plus clairement au cours de la description explicative qui va suivre, faite en référence aux dessins schématiques annexés donnés uniquement à titre d'exemple illustrant plusieurs modes de réalisation de l'invention et dans lesquels :

La figure 1 est une vue en coupe axiale d'un brûleur selon la présente invention ;

La figure 2 est une vue en direction de la flèche II de la figure 1 ;

Les figures 3 à 5 sont des vues en coupe axiale de trois variantes d'exécution d'un tube foyer selon la présente invention ;

La figure 6 est une vue en coupe axiale d'un tube radiant à recirculation selon l'invention, adapté pour coopérer avec un brûleur selon la présente invention ;

La figure 7 est une vue en coupe selon la ligne VII-VII de la figure 6 ;

La figure 8 est une vue axiale d'un manchon d'articulation de deux tronçons de tube interne selon la présente invention,

La figure 9 est une vue en coupe axiale, avec arrachement, d'une variante de réalisation du dispositif d'allumage d'un brûleur selon l'invention.

La figure 10 est une vue en coupe axiale d'un autre mode de réalisation d'un brûleur selon l'invention.

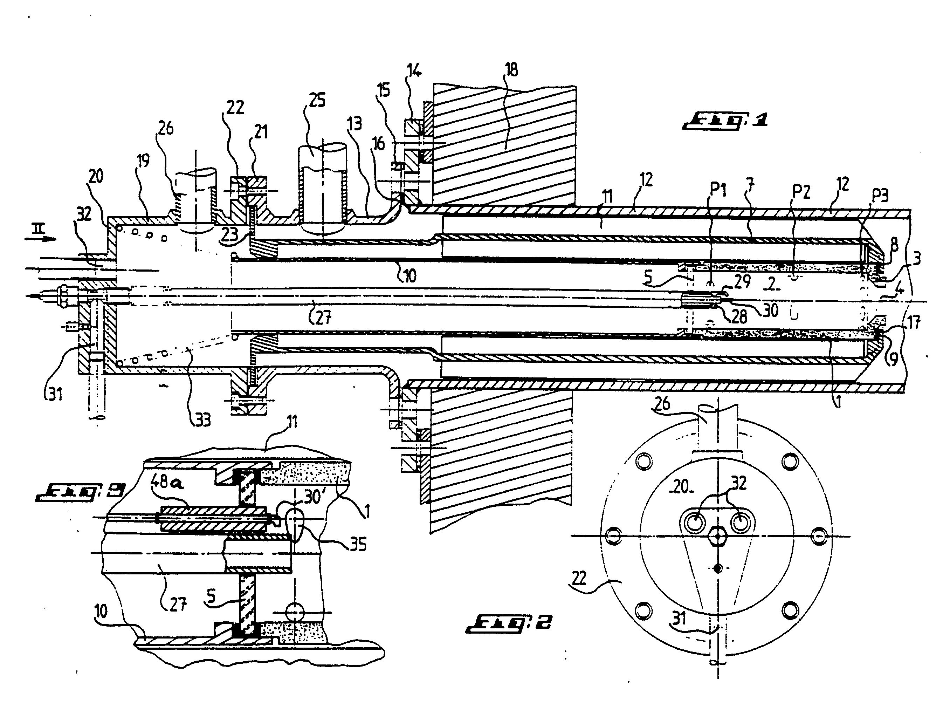

La figure 1 montre un brûleur à grande vitesse de sortie des gaz brûlés, selon la présente invention. Ce brûleur comprend essentiellement un tube foyer 1 en céramique thermomécanique qui délimite la chambre de combustion 2 du brûleur et présente une forme simple avec un rétreint 3 à l'extrémité de sortie des gaz brûlés, pour donner une forte impulsion aux produits de combustion à leur sortie du brûleur. Du côté opposé à la sortie 4 définie par le rétreint 3, la chambre de combustion 2 est fermée par un disque transparent 5. Un élément tubulaire 7 entoure coaxialement le tube foyer 1. Cet élément tubulaire 7 comprend à son extrémité située du côté de la sortie 4 des gaz brûlés un rétrécissement radial qui forme une butée 8 de positionnement axial du tube foyer 1 qui entoure coaxialement le rétreint 3 de celui-ci. Le tube foyer 1 prend appui sur cette butée 8 par un épaulement radial annulaire 9, pratiqué dans le rétreint 3 avec interposition d'un joint d'étanchéité 17. L'élément tubulaire 7 entoure également coaxialement un tube 10 qui est placé en prolongation axiale du tube foyer 1, du côté du disque de fermeture 5 de la chambre de combustion. Le tube 10 présente le même diamètre que le tube foyer 1.

Sur la figure 1, qui montre un brûleur selon l'invention conformé en brûleur à récupération, l'élément tubulaire 7 est réalisé sous forme d'un échangeur de chaleur en alliage réfractaire à ailettes 11. Cet échangeur de chaleur est constitué à partir de tronçons d'une certaine longueur, par exemple de 90 mm, qui sont soudés entre eux. Un tube enveloppe extérieur 12 et un tronçon de tube 13 qui est disposé dans le prolongement axial du tube 11 entourent coaxialement l'échangeur de chaleur 7. A leur extrémité en regard, les tubes 12 et 13 sont pourvus de brides respectivement 14 et 15 qui permettent le raccordement des tubes entre eux, avec interposition d'un joint indiqué en 16, et la fixation du brûleur à la paroi schématiquement représentée en 18, par exemple d'un four. L'espace délimité par les tubes 12 et 13 est formé, du côté opposé au tube foyer 1 par un élément tubulaire d'enveloppe 19 qui est situé dans le prolongement axial du tube 13 est fermé à son extrémité libre, par une paroi 20 perpendiculaire à l'axe de l'ensemble tubulaire. Les extrémités en regard du tube 13 et de l'élément d'enveloppe 19 sont pourvues de brides de raccordement 21, 22. On constate que l'échangeur de chaleur 7 est maintenu à son extrémité opposée à son nez à butée 9 pour le positionnement du tube foyer entre les brides 21 et 22, par des éléments 23 faisant radialement saillies vers l'extérieur. Le tronçon de tube 13 est muni d'un piquage 25 d'évacuation des gaz brûlés, tandis que l'élément d'enveloppe 19 est équipé d'un piquage 26 pour l'arrivée de l'air de combustion. On constate que l'échangeur de chaleur 7 sépare les flux d'air de combustion entrant dans le brûleur en 26 et les gaz brûlés qui circulent à contre-courant et sortent du brûleur par le piquage 25.

L'arrivée des gaz est assurée par un tube d'amenée 27 qui s'étend dans l'axe du tube 10 depuis la paroi 20 de l'élément enveloppe 19 dans la chambre de combustion 2 en traversant le disque transparent 5. Les gaz pénètrent dans la chambre 2 par des orifices 28, par exemple au nombre de six, qui sont répartis angulairement sur le conduit formant canne de gaz 27, près de son extrémité. La canne 27 porte à son extrémité un dispositif d'allumage à haute tension. L'électrode de masse représentée en 29 est soudée sur la canne tandis que l'électrode haute tension désignée en 30 est située dans l'axe de celle-ci. Elle est constituée d'une tige en alliage réfractaire placée dans une gaine en alumine. Le gaz est amené à la canne 27 par un canal 31 pratiqué dans la paroi 20 de l'élément d'enveloppe 19. Cette paroi 20 comporte des fenêtres 32 transparentes aux rayons ultra-violet de manière à permettre la vision de la flamme par une cellule de détection ultra-violet.

Dans le mode de réalisation selon la figure 1, un ressort hélicoïdal 33 est disposé à l'intérieur du brûleur et a pour fonction d'assurer l'assemblage du tube foyer 1 en céramique thermomécanique à l'intérieur du brûleur, uniquement par sa force de pression axiale. A cette fin le ressort est interposé entre l'extrémité libre du tube 10 et la paroi 20. Sous l'effet de la force de pression exercée par le ressort 33, le tube foyer 2 et le tube 10 sont maintenus en alignement axial, le tube foyer 2 prenant appui par son épaulement 9 sur la butée 8 prévue dans le nez de l'échangeur de chaleur 7. Sous l'effet du ressort 33, le tube foyer est positionné axialement et radialement dans le nez de l'échangeur, par son rétreint 3.

Dans le mode de réalisation représenté à la figure 10, le moyen d'assemblage par force axiale du tube foyer 1 en céramique thermomécanique à l'intérieur du brûleur comporte essentiellement deux aimants 48, 49 annulaires dont l'un 48 est disposé sur le tube 10 au niveau de l'extrémité ouverte de celui-ci tandis que l'autre 49 est monté sur la paroi 20 de fond de l'enveloppe du brûleur. Les deux aimants 48, 49 sont situés en regard dans le sens axial du brûleur de façon que leurs extrémités ayant la même polarité soient axialement en vis-à-vis pour produire une force de répulsion axiale assurant l'assemblage des différents éléments du brûleur.

Sur la figure 10, on a représenté en traits interrompus une autre possibilité d'assemblage à l'aide de moyens aimants. Dans ce cas un seul aimant indiqué en 50 suffit. Cet aimant est disposé sur la surface externe du tube 10 proche d'un élément métallique solidaire de l'enveloppe du brûleur, du côté du tube opposé à celle coopérant avec le tube foyer 1. La partie métallique fixe est avantageusement formée par les éléments 23 de l'échangeur de chaleur 7 qui s'étendent perpendiculairement à l'axe du brûleur. On comprend aisément que la force d'assemblage est formée par la force d'attraction présente entre l'aimant en forme de bague 50 et les éléments métalliques 23 du tube 7.

En se reportant notamment aux figures 1 et 3 à 5, on décrira ci-après les mesures constructives spécifiques au système d'amenée de l'air de combustion dans la chambre de combustion.

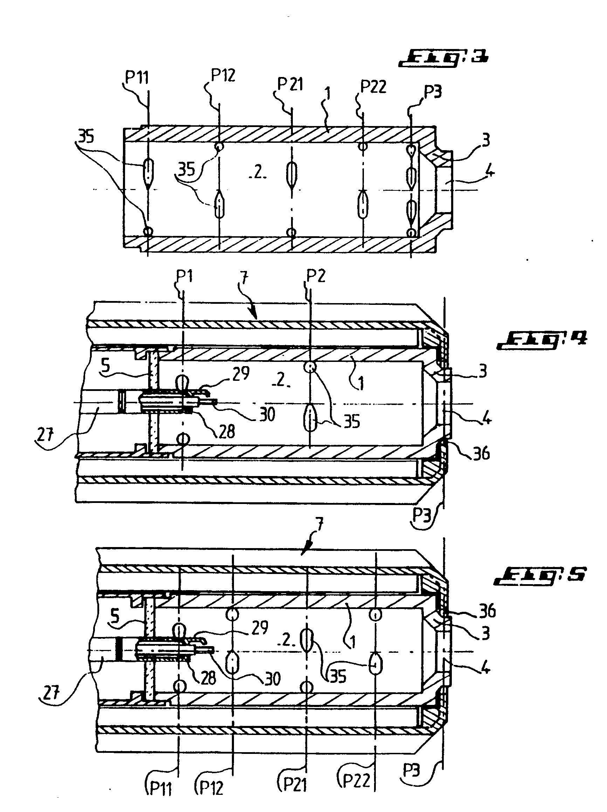

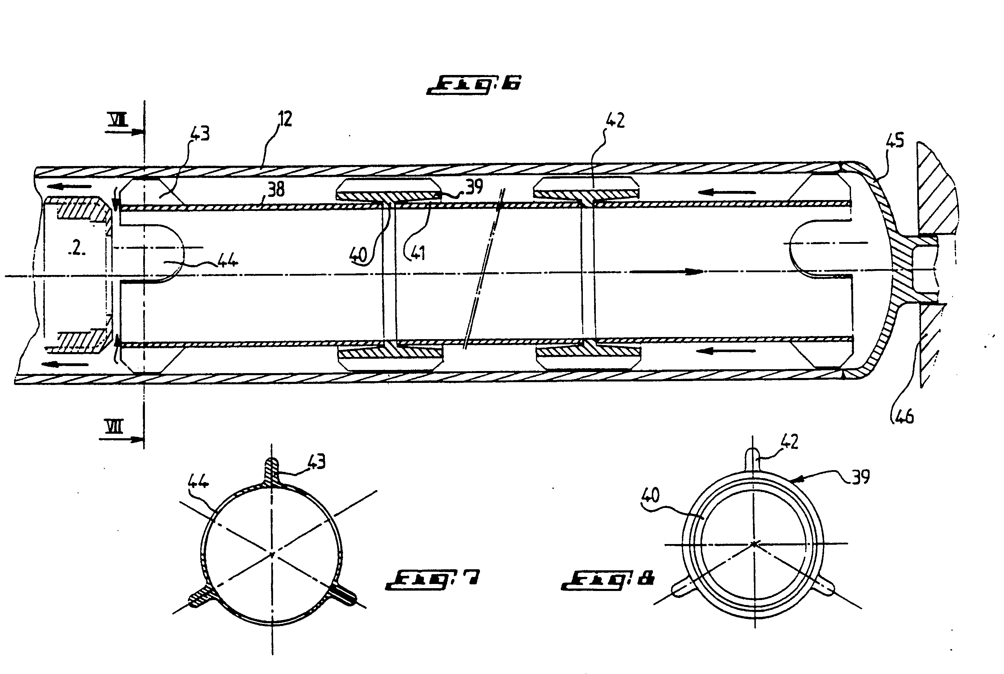

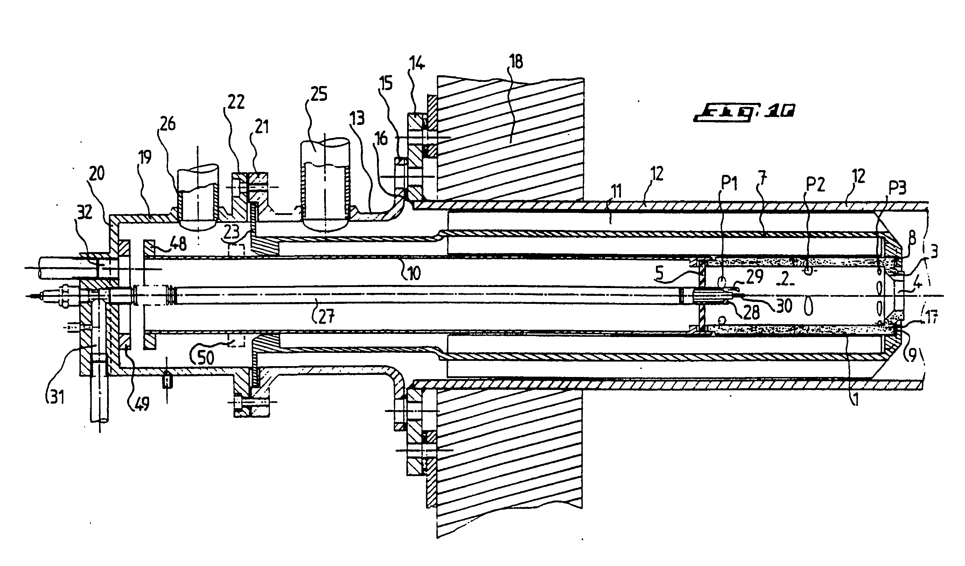

A la figure 1, le tube foyer 1 comprend trois plans d'arrivée d'air P1, P2 et P3, qui sont axialement distants. Chaque plan comporte un certain nombre de trous 35 tangentiels qui sont situés dans un même plan perpendiculaire à l'axe du tube foyer et permettent l'entrée des gaz depuis l'échangeur de chaleur 7 dans la chambre de combustion 2, selon les trajectoires sensiblement tangentielles. Dans sa version représentée à la figure 3, le tube foyer comporte cinq plans P11, P12, P21, P22, et P3 d'arrivée d'air. Dans ces deux modes de réalisation du tube foyer 1, la totalité de l'air est injectée dans la chambre de combustion 2. Dans les modes de réalisation représentés aux figures 4 et 5, qui comportent également respectivement trois et cinq plans d'arrivée d'air, le plan d'arrivée, qui est le plus éloigné du fond de la chambre de combustion, c'est-à-dire le troisième plan sur la figure 4 et le cinquième plan sur la figure 5 comportent des trous 36 qui sont présents dans le nez du brûleur et permettent d'injecter l'air de combustion directement dans la flamme à la sortie 4 de la chambre de combustion, après le rétreint 3.

Concernant les trous d'arrivée d'air, on constate que le premier plan d'arrivée d'air est situé sensiblement au niveau des orifices d'arrivée de gaz 28 de la canne de gaz 27. Dans la version à trois plans d'arrivée d'air, selon la figure 1, les deux premiers plans P1, P2, dans le sens de propagation des fluides sont constitués de quatre trous tangentiels, les trous d'un plan étant angulairement décalés de par exemple 45° des trous de l'autre plan et sont orientés tangentiellement dans des directions opposées. Le troisième plan P3, situé au niveau du nez du brûleur comprend huit trous tangentiels répartis angulairement à contre-sens par rapport aux trous du plan P2. Dans la version à cinq plans d'arrivée d'air, selon la figure 3, les quatre plans P11 à P22 présentent chacun quatre trous tangentiels régulièrement répartis autour de l'axe du tube foyer 2 et orientés à contre-sens d'un plan à l'autre. Le cinquième plan P3, situé au niveau du nez du brûleur, comporte huit trous tangentiels, orientés dans le sens contraire aux trous du plan P22. Dans les modes de réalisation représentés aux figures 4 et 5 les plans de trous d'arrivée d'air traversant la paroi du tube foyer 1 comportent chacun quatre trous tangentiels 35 régulièrement répartis autour de l'axe du tube. Les trous d'un plan sont angulairement décalés par rapport aux trous de l'autre plan, par exemple selon un angle de 45° et sont orientés dans la direction tangentielle inverse à celle des trous des plans adjacents. Le dernier plan d'arrivée d'air, adapté pour injecter l'air directement dans la flamme à la sortie du brûleur, comporte huit trous 9 qui ne traversent par la paroi du tube, comme il ressort des figures.

La figure 9 montre un autre mode de réalisation d'un dispositif d'allumage à haute tension selon l'invention. On constate que dans ce mode de réalisation le conduit 27 formant canne de gaz est entièrement ouvert à son extrémité située à l'intérieur de la chambre de combustion 2. L'arrivée de gaz se fait donc axialement, ce qui permet la suppression des orifices radiaux 28 selon la figure 1. L'électrode haute tension représentée en 30' s'étend maintenant parallèlement à la canne 27. Pour assurer son positionnement correct et fiable, elle est retenue par un tube isolant en alumine 48a, qui l'entoure coaxialement et traverse le disque transparent 5. L'électrode de masse est avantageusement formée par la canne 27.

Ce mode de réalisation du dispositif d'allumage permet la détection de la flamme directement par une cellule de contrôle appropriée dans la paroi 20 de l'élément enveloppe 29. Contrairement au mode de réalisation représenté à la figure 1, les ondes ultraviolet émis par la flamme n'ont pas à traverser le fond de la chambre de combustion 2, c'est-à-dire le disque 5, pour qu'on puisse contrôler la flamme. Ceci permet un contrôle efficace de la flamme même dans le cas d'un obscurcissement du fond de la chambre de combustion par des fluides gazeux pollués.

En se reportant maintenant aux figures 6 à 8, on décrira la partie du système chauffant à recirculation des gaz brûlés, qui est située dans la prolongation axiale du brûleur et constitue un tube radiant en doigt de gant. En 12 on reconnaît le tube enveloppe extérieur 12 qui entoure également le dispositif brûleur. Ce tube 12 entoure axialement un tube interne 38 en céramique thermomécanique qui se compose d'un certain nombre de tronçons axialement alignés qui sont reliés entre eux par articulation, à l'aide de moyens de liaison souples. Chacun de ces moyens est réalisé sous forme d'un manchon 39 en céramique entourant coaxialement les extrémités de deux tronçons de tube adjacents. La surface radialement interne d'un tel manchon 39 comporte au milieu de sa longueur une collerette annulaire 40 qui fait radialement saillie vers l'intérieur et s'engage entre les deux extrémités des tronçons à relier. Le diamètre interne de la collerette cylindrique 40 correspond essentiellement au diamètre interne des tronçons de tubes 38, tandis que le diamètre externe de la collerette annulaire est un peu plus grand que le diamètre externe du tube, de façon à laisser subsister un certain jeu radial. Les parties de surface interne 41 situées de part et d'autre de la collerette 40 présentent un diamètre qui augmente progressivement en direction des extrémités du manchon. L'augmentation du diamètre est déterminée de façon à permettre aux différents tronçons de suivre, par un désaxage axial approprié, le mouvement de fluage du tube enveloppe 12 en alliage métallique réfractaire. Chaque manchon 39 comporte sur sa surface cylindrique externe des nervures de centrage 42 dans l'enveloppe externe 12. Les premier et dernier tronçons de tubes 38 comportent au niveau de leur extrémité des nervures de centrage 43 et des découpes ou ouies en forme de U 44, pratiquées dans la paroi cylindrique du tronçon entre deux nervures de centrage 42. Le tube interne 38 ainsi composé est ouvert à ses deux extrémités, ce qui permet la circulation des gaz brûlés sortant de la chambre de combustion 2 dans le tube 38 et dans l'espace annulaire créé entre le tube interne 38 et le tube enveloppe 12 de la manière indiquée par des lignes fléchées. On constate encore que le tube enveloppe 12 est fermé à son extrémité éloignée du brûleur par un élément de fermeture 45 adapté pour être engagé dans une paroi par exemple d'un four représentée schématiquement en 46.

Grâce à la présence des ouies 44, le tube radiant peut être utilisé même en position verticale. En effet, les ouies assurent une circulation suffisante des gaz de combustion même si le dernier tronçon du tube 38 est en appui sur le fond de l'enveloppe, après un déplacement axial de ce tronçon ou de plusieurs tronçons. A cette fin, la demi longueur axiale d'un tronçon 39 doit être supérieure à la somme des jeux axiaux entre le tube 38 et les éléments adjacents et les différents tronçons.

Etant donné que les tronçons du tube 38 selon l'invention présentent un diamètre intérieur et extérieur constant sur toute sa longueur, on peut adapter le tube à toute longueur utile par simple découpe de tronçons ou d'un tronçon à la longueur désirée ou construire le tube à partir d'un certain nombre de modules standards de différentes longueurs.

Le fonctionnement d'un brûleur à grande vitesse de sortie des gaz et d'un brûleur auto-récupérateur de ce type ainsi que celui de tubes radiants en doigt de gants étant connu, on se contentera ci-après de ne décrire que les aspects qui sont spécifiques de l'invention.

Il est tout d'abord à souligner que dans le brûleur selon l'invention, le montage des pièces en alliage métallique et du tube foyer en céramique thermomécanique, uniquement par force de pression axiale, produite par le ressort 33, constitue une solution optimale qui élimine totalement tout problème pouvant être occasionné par des comportements thermomécaniques très différents de ces deux types de matériaux. Dans le tube radiant l'assemblage par articulation des différents tronçons de tubes 38 en céramique thermomécanique permet d'échapper au problème posé par les déformations thermiques auquel est sujet le tube enveloppe extérieur 12. Les mesures constructives spécifiques de l'invention tiennent donc parfaitement compte des coefficients de dilatation et du comportement à haute température totalement différent des différentes pièces constitutives du système selon l'invention. Celle-ci permet d'utiliser des pièces en céramique thermomécanique dans les parties les plus chaudes du système. En effet, ces matériaux acceptent des températures de fonctionnement de 1400°, soit 300 à 400° de plus que dans les brûleurs à grande vitesse de sortie des gaz brûlés, qui sont actuellement connus et dans lesquels même le tube foyer et l'élément tubulaire interne du tube radiant sont en acier réfractaire. L'invention permet de récupérer pleinement la chaleur sur les gaz brûlés en assurant un effet de préchauffage de l'air de combustion. Enfin, la conformation selon l'invention du tube foyer 1 permet de réduire considérablement le taux de production d'oxydes d'azote, comme cela sera expliqué ci-après.

Pour la réduction du taux de production d'oxyde d'azote selon l'invention, on exploite le fait que la production d'oxyde d'azote en fonction du rapport de la quantité de l'air de combustion réellement admis dans la chambre de combustion à la quantité d'air stoechiométrique nécessaire pour une combustion complète instantanée varie selon une courbe en cloche, le taux d'oxyde d'azote étant maximal lorsque ce rapport est égal à 1. Selon l'invention on résout le problème de la réduction du taux de production d'oxyde d'azote en étageant la combustion dans la chambre de combustion 2, grâce aux différents plans d'arrivée d'air de combustion, qui sont axialement décalés dans la direction de la propagation du fluide gazeux dans la chambre, les arrivées d'air étant disposées en contre-rotation, d'un plan à l'autre. Le gaz est introduit radialement dans la chambre de combustion.

Dans le brûleur selon l'invention, dans un premier temps, le gaz est mélangé à l'air de combustion pénétrant dans la chambre au niveau du premier plan, selon les figures 1 et 4 où des deux premiers plans selon les figures 3 et 5, qui est plaqué contre la paroi de la chambre de combustion 2 par sa mise en rotation par les trous d'arrivée tangentiels 35. Avec ce premier mélange s'amorce la combustion qui est incomplète et peu intensive. Dans un deuxième temps, c'est-à-dire au niveau du deuxième plan d'arrivée d'air selon les figures 1 et 4 ou dans les troisième et quatrième plans selon les figures 3 et 5, l'air est ajouté en contre-rotation au mélange en cours de combustion, provoquant ainsi un brassage important. Ceci a pour conséquence d'accélérer considérablement la combustion tout en restant dans un rapport air-gaz sensiblement différent de 1 de manière à réduire la production d'oxydes d'azote. Dans un troisième temps la combustion se termine par l'arrivée de l'air dans le dernier plan d'arrivée d'air, toujours mis en rotation et plaqué contre la paroi des trous tangentiels ou, dans le cas des figures 3 et 5, par injection de l'air dans la flamme à la sortie du brûleur. Cette arrivée de l'air tangentielle sur plusieurs niveaux axialement décalés dans la chambre de combustion 2 permet d'une part de réaliser la combustion complète dans une chambre de volume restreint grâce à ce brassage intense provoqué par les arrivées d'air en contre-rotation, et d'autre part, de réduire la production d'oxydes d'azote en étageant la combustion.

Des gaz brûlés qui s'échappent du brûleur avec une grande vitesse sont injectés dans le tube interne 38 en céramique qui se composent d'un certain nombre de tronçons liés librement par des manchons de jonction 39 qui autorisent un désaxage entre tronçons adjacents de par exemple quelques degrés de manière à ne pas gêner le fluage et les déformations du tube enveloppe 12, ces éléments de jonction, grâce à leurs nervures 42 permettant de positionner et de centrer le tube intérieur 38 dans le tube enveloppe 12. Les découpes 43 formant ouies aux deux extrémités du tube interne 38 favorisent la recirculation des gaz brûlés.

**Revendications**

1. Système à brûleur notamment à grande vitesse de sortie des gaz brûlés, comprenant un tube foyer central délimitant une chambre de combustion dans laquelle est admis le mélange de gaz combustible et de gaz comburant tel que de l'air, un élément tubulaire entourant coaxialement le tube foyer en formant un espace annulaire autour de celui-ci qui est parcouru par de l'air comburant devant être admis dans le tube foyer, celui-ci présentant à son extrémité de sortie des gaz brûlés un rétreint pour augmenter la vitesse de sortie des gaz, dans lequel système le tube foyer est en céramique thermomécanique, l'élément tubulaire comporte à son extrémité située du côté sortie des gaz un rétrécissement radial qui forme une butée de positionnement axial et radial pour le tube foyer, l'assemblage de ce dernier aux autres pièces constitutives du brûleur est effectué sous l'effet d'un moyen d'assemblage susceptible de produire une force de pression axiale sous l'impact de laquelle le tube foyer prend appui sur ladite butée par un épaulement radial prévu dans sa partie de rétreint, caractérisé en ce qu'il comprend un tube (10) en alliage métallique qui a au moins dans sa partie adjacente au tube foyer (1) sensiblement le même diamètre que celui-ci et est axialement aligné avec ce tube, à l'intérieur de l'élément tubulaire précité (7), et dans lequel s'étend un conduit (27) d'amenée de gaz à la chambre de combustion (2), et en ce que le moyen d'assemblage est réalisé sous forme d'un ressort (33) prenant appui par une extrémité sur l'extrémité libre du tube de prolongement (10) et par son autre extrémité sur une autre surface (20) perpendiculaire à l'axe du tube (10), à l'intérieur de l'enveloppe du brûleur.

2. Système à brûleur notamment à grande vitesse de sortie des gaz brûlés, comprenant un tube foyer central délimitant une chambre de combustion dans laquelle est admis le mélange de gaz combustible et de gaz comburant tel que de l'air, un élément tubulaire entourant coaxialement le tube foyer en formant un espace annulaire autour de celui-ci qui est parcouru par de l'air comburant devant être admis dans le tube foyer, celui-ci présentant à son extrémité de sortie des gaz brûlés un rétreint pour augmenter la vitesse de sortie des gaz, dans lequel système le tube foyer est en céramique thermomécanique, l'élément tubulaire comporte à son extrémité située du côté sortie des gaz un rétrécissement radial qui forme une butée de positionnement axial et radial pour le tube foyer, l'assemblage de ce dernier aux autres pièces constitutives du brûleur est effectué sous l'effet d'un moyen d'assemblage susceptible de produire une force de pression axiale sous l'impact de laquelle le tube foyer prend appui sur ladite butée par un épaulement radial prévu dans sa partie de rétreint, caractérisé en ce qu'il comprend un tube (10) en alliage métallique qui a au moins dans sa partie adjacente au tube foyer (1) sensiblement le même diamètre que celui-ci et est axialement aligné avec ce tube, à l'intérieur de l'élément tubulaire précité (7), et dans lequel s'étend un conduit (27) d'amenée de gaz à la chambre de combustion (2), et en ce que le moyen d'assemblage comporte deux aimants (48, 49) avantageusement annulaires dont l'un (48) est disposé sur le tube (10) tandis que l'autre (49) est monté sur l'enveloppe (20) du brûleur en regard de l'aimant (48), dans le sens axial du brûleur, de façon que les extrémités des aimants ayant la même polarité magnétique soient axialement en regard pour produire une force de répulsion axiale.

3. Système à brûleur notamment à grande vitesse de sortie des gaz brûlés, comprenant un tube foyer central délimitant une chambre de combustion dans laquelle est admis le mélange de gaz combustible et de gaz comburant tel que de l'air, un élément tubulaire entourant coaxialement le tube foyer en formant un espace annulaire autour de celui-ci qui est parcouru par de l'air comburant devant être admis dans le tube foyer, celui-ci présentant à son extrémité de sortie des gaz brûlés un rétreint pour augmenter la vitesse de sortie des gaz, dans lequel système le tube foyer est en céramique thermomécanique, l'élément tubulaire comporte à son extrémité située du côté sortie des gaz un rétrécissement radial qui forme une butée de positionnement axial et radial pour le tube foyer, l'assemblage de ce dernier aux autres pièces constitutives du brûleur est effectué sous l'effet d'un moyen d'assemblage susceptible de produire une force de pression axiale sous l'impact de laquelle le tube foyer prend appui sur ladite butée par un épaulement radial prévu dans sa partie de rétreint, caractérisé en ce qu'il comprend un tube (10) en alliage métallique qui a au moins dans sa partie adjacente au tube foyer (1) sensiblement le même diamètre que celui-ci et est axialement aligné avec ce tube, à l'intérieur de l'élément tubulaire précité (7), et dans lequel s'étend un conduit (27) d'amenée de gaz à la chambre de combustion (2), et en ce que le moyen d'assemblage comprend un aimant (50) monté sur la surface externe du tube (10), à un emplacement proche d'une partie métallique (23) solidaire de l'enveloppe du brûleur, du côté du tube qui est opposé à l'extrémité coopérant avec le tube foyer (1), pour produire une force d'attraction axiale entre cet aimant (50) et ladite partie métallique (23).

4. Système selon l'une des revendications 1 à 3, caractérisé en ce que le tube foyer (1) comprend un certain nombre de plans d'arrivée d'air (P1, P2, P3, P11, P12, P21, P22, P3), qui sont axialement décalés dans le sens de l'écoulement des gaz brûlés et du type à introduction d'air tangentiel à contre-rotation, de façon à produire une combustion étagée pour réduire le taux de production d'oxydes d'azote, les arrivées d'air situées dans une première zone de plans d'arrivée (P1 ; P11, P12), sensiblement au niveau de l'arrivée du gaz (28), étant adaptées pour assurer une combustion incomplète et peu intensive, les arrivées d'air situées dans une deuxième zone de plans d'arrivée (P2 ; P21, P22), en contre-rotation aux arrivées d'air du premier plan, étant adaptées pour accélérer la combustion sans que le rapport air-gaz atteigne la valeur stoechiométrique, tandis que les arrivées d'air dans une troisième zone (P3) sont adaptées pour achever la combustion.

5. Système selon la revendication 4, caractérisé en ce que chaque plan d'arrivée d'air comporte un certain nombre de trous (35) qui traversent la paroi du tube foyer (1) et sont orientés tangentiellement dans un plan perpendiculaire à l'axe du tube foyer (1), et en ce que les orientations tangentielles des trous sont opposées d'un plan à l'autre, les trous d'un plan étant avantageusement angulairement décalés par rapport aux trous des plans voisins.

6. Système selon l'une des revendications 4 à 6, caractérisé en ce que tous les trous d'arrivées d'air (35) débouchent dans l'intérieur de la chambre de combustion (2).

7. Système selon l'une des revendications 4 à 7, caractérisé en ce que le plan troisième d'arrivée d'air (P3) comporte des trous (36) qui sont pratiqués dans le nez du brûleur de façon à injecter l'air directement dans la flamme à la sortie (4) du brûleur après le rétreint (3), cet air produisant un effet supplémentaire de refroidissement du nez du brûleur.

8. Système selon l'une des revendications précédentes, caractérisé en ce que la partie du tube d'amenée de gaz (27), situé à l'intérieur de la chambre de combustion (2) comporte un certain nombre d'orifices radiaux (28) de sortie du gaz et les moyens d'allumage, avantageusement du type à haute tension, qui comprennent une électrode de masse soudée sur le conduit (27) tandis que l'électrode haute tension (30) est située dans l'axe du conduit (27).

9. Système selon l'une des revendications précédentes, caractérisé en ce que la chambre de combustion (2) est fermée du côté opposé à la sortie des gaz (4) par un disque transparent (5) qui s'étend perpendiculairement à l'axe du tube foyer (1) et permet la vision de la flamme à travers des fenêtres (32) dans l'enveloppe du brûleur, qui sont transparentes aux rayons ultra-violet.

10. Système selon l'une des revendications précédentes, caractérisé en ce que le brûleur est adapté pour constituer un brûleur du type à récupération et comporte une enveloppe tubulaire externe (12), qui forme un espace annulaire autour de l'élément tubulaire (7) pour la recirculation des gaz brûlés après leur passage par un dispositif chauffant, avantageusement du type tube radiant en doigt de gant à recirculation.

11. Système selon la revendication 11, caractérisé en ce que l'élément tubulaire précité (7) est constitué par un tube échangeur de chaleur avantageusement à aillettes (11), séparant le flux d'air de combustion et les gaz brûlés circulant à contre-courant à ce flux d'air.

12. Système selon l'une des revendications 11 ou 12, caractérisé en ce que le tube radiant comprend un tube enveloppe externe (12) dont la prolongation axiale forme l'enveloppe tubulaire externe du brûleur et un tube interne (38) en céramique situé en prolongation axiale du tube foyer (1) du brûleur et se composant d'un certain nombre de tronçons reliés axialement par des moyens d'articulation (39) établissant une liaison souple.

13. Système selon la revendication 13, caractérisé en ce que les tronçons de tube (38) sont disposés bout-à-bout et lesdits moyens d'articulation (39) sont réalisés sous forme d'un manchon (39) entourant coaxialement les extrémités de tronçons à relier (38) et dont la surface radialement interne comprend avantageusement au milieu de sa longueur une collerette annulaire (40) radialement saillant vers l'intérieur, qui s'engage entre deux tronçons de tubes (38) en ayant le même diamètre interne que celui-ci, tandis que les parties de surface interne (41) situées de part et d'autre de la collerette (40) vont en s'élargissant vers les extrémités du manchon, de façon à permettre un désaxage des tronçons de tubes reliés par le manchon (39), ce dernier portant avantageusement sur sa surface externe des nervures (42) pour son centrage à l'intérieur du tube enveloppe (12).

14. Système selon l'une des revendications 13 ou 14, caractérisé en ce que le tube interne (38) comprend à ses extrémités des moyens pour son centrage à l'intérieur du tube enveloppe (12), telles que des nervures radiales (43).

15. Système selon l'une des revendications 13 à 15, caractérisé en ce que le tube interne (38) comporte à ses extrémités des ouies (44) favorisant la circulation des gaz.

16. Système selon l'une des revendications 14 à 16, caractérisé en ce que la longueur de la zone de recouvrement axiale d'un tronçon de tube, d'un manchon (39) est supérieure à la somme des jeux axiaux entre le tube (38) et les éléments adjacents et les différents tronçons.

17. Tube selon l'une des revendications 13 à 17, caractérisé en ce qu'un tronçon du tube (38) présente un diamètre intérieur et extérieur, qui est constant sur toute la longueur axiale du tronçon.

18. Système selon l'une des revendications précédentes, caractérisé en ce que le conduit (27) d'amenée de gaz à la chambre de combustion (2) est ouvert à son extrémité intérieure à la chambre de combustion (2) de façon à pouvoir contrôler la flamme directement de l'extérieur, même en cas d'un obscurcissement de la paroi (5) formant le fond de la chambre de combustion (2).

19. Système selon la revendication 19, caractérisé en ce qu'il comprend des moyens d'allumage qui comportent avantageusement une électrode haute tension (30') qui s'étend parallèlement au conduit d'amenée de gaz (27), au niveau de l'extrémité ouverte de celui-ci, à l'intérieur de la chambre de combustion (2), l'électrode de masse étant avantageusement formée par le conduit (27).

## Patentansprüche

1. Brennersystem insbesondere mit grosser Austrittsgeschwindigkeit der verbrannten Gase, mit einem zentralen Feuerungsrohr, welches eine Brennkammer in welcher ein Gemisch von brennbarem Gas und von die Verbrennung bewirkendem Gas wie Luft eingelassen wird, begrenzt, einem rohrförmigen Element, dass das Feuerungsrohr koaxial umgibt indem es einen ringförmigen Raum um dieses herum bildet, der durch die Verbrennung bewirkende Luft, die in das Feuerungssrohr einzulassen ist, durchströmt wird, wobei das letztere an seinem Auslassende für die verbrannten Gase eine Einschnürung aufweist, um die Austrittsgeschwindigkeit der Gase zu erhöhen, bei welchem System das Feuerungsrohr aus thermomechanischer Keramik ist, das röhrförmige Element an seinem zum Auslass der Gase hin liegenden Enden eine radiale Verengung aufweist, die einen axialen und radialen Positionierungsanschlag für das Feuerungsrohr bildet, die Zusammenfügung des letzteren mit anderen Bestandteilen des Brenners unter der Wirkung eines Zusammenfügungsmittels erfolgt, welches fähig ist, eine axiale Druckkraft zu erzeugen, unter deren Stoss das Feuerungsrohr sich an dem besagten Anschlag durch eine in seinem Einschnürungsteil vorgesehene radiale Schulter abstützt, dadurch gekennzeichnet, dass es ein Rohr (10) aus metallischer Legierung umfasst, das wenigstens in seinem an das Feuerungsrohr (1) angrenzenden Teil im wesentlichen den selben Durchmesser wie das letztere hat und mit diesem Rohr innerhalb des vorgenannten röhrförmigen Elements (7) axial fluchtet, und in welchem sich eine Leitung (27) zur Gaszufuhr zur Brennkammer (2) erstreckt, und dass das Zusammenfügungsmittel in der Gestalt einer Feder (33) ausgeführt ist, welche sich mit einem Ende an dem freien Ende des Verlängerungsrohrs (10) und mit seinem anderen Ende an einer senkrecht zur Achse des Rohrs (10) stehende andere Fläche (20) innerhalb der Umhüllung des Brenners abstützt.

2. Brennersystem insbesondere mit grosser Austrittsgeschwindigkeit der verbrannten Gase, mit einem zentralen Feuerungsrohr, welches eine Brennkammer begrenzt, in welcher das Gemisch von brennbaren Gas und von die Verbrennung bewirkenden Gas wie Luft eingelassen wird, einem rohrförmigen Element, dass das Feuerungsrohr koaxial umgibt, indem es einen ringförmigen Raum um dieses herum bildet, welcher durch die Verbrennung bewirkende und in das Feuerungsrohr einzulassende Luft durchströmt wird, wobei dieses an seinem Auslassende für die verbrannten Gase eine Einschnürung aufweist, um die Austrittsgeschwindigkeit der Gase zu erhöhen, in welchem System das Feuerungsrohr aus thermomechanischer Keramik besteht, das rohrförmiger Element an seinem zum Auslass der Gase hin liegenden Ende, eine radiale Verengung aufweist, die einen axialen und radialen Positionierungsanschlag für das Feuerungsrohr bildet, die Zusammenfügung des letzteren mit anderen Bestandteilen des Brenners unter der Wirkung eines Zusammenfügungsmittels durchgeführt wird, welches fähig ist, eine axiale Druckkraft zu erzeugen, unter deren Stoss das Feuerungsrohr sich an dem besagten Anschlag durch eine in seinem Einschnürungsteil vorgesehne radiale Schulter abstüzt, dadurch gekennzeichnet, dass es ein Rohr (10) aus metallischer Legierung aufweist, dass wenigstens in seinem an das Feuerungsrohr (1) angrenzenden Teil, im wesentlichem den selben Durchmesser als das letztere hat und mit diesem Rohr innerhalb des vorgenannten rohrförmigen Elementes (7) axial fluchtet und in welchem sich eine Leitung (27) zur Gaszuführung zu der Brennkammer (2) erstreckt und dass das Zusammenfügungsmittel zwei in vorteilhafter Weise ringförmige Magnete (48, 49) aufweist, von denen der eine (48) an dem Rohr (10) angebracht ist, während der andere (49) an der Umhüllung (20) des Brenners gegenüber dem Magnet (48) in der Axialrichtung des Brenners angeordnet ist, so dass die Enden der Magnete mit der selben magnetischen Polarität einander axial gegenüber liegen, um eine axiale Abstosskraft zu erzeugen.

3. Brennersystem insbesondere mit grosser Austrittsgeschwindigkeit der verbrannten Gase, mit einem zentralen Feuerungsrohr, dass eine Brennkammer begrenzt, in welcher das Gemisch von brennbaren Gas und von die Verbrennung bewirkender Luft eingelassen wird, einem rohrförmigen Element, dass das Feuerungsrohr koaxial umgibt indem es einen ringförmigen Raum um dieses herumbildet, welcher durch die Verbrennung bewirkende, in das Feuerungsrohr einzulassende Luft durchströmt wird, wobei das letztere an seinem Auslassende für die verbrannten Gase, eine Einschnürung aufweist, um die Austrittsgeschwindigkeit der Gase zu erhöhen, in welchem System das Feuerungsrohr aus thermomechanischer Keramik besteht, das rohrförmige Element an seinem zum Auslass der Gase hin liegenden Ende eine radiale Verengung aufweist, welche einen axialen und radialen Positionierungsanschlag für das Feuerungsrohr bildet, die Zusammenfügung des letzteren mit anderen Bestandteilen des Brenners unter der Wirkung eines Zusammenfügungsmittels durchgeführt wird, welches fähig ist, eine axiale Druckkraft zu erzeugen, unter deren Stoss das Feuerungsrohr sich an dem besagten Anschlag durch eine in seinem Einschnürungsteil vorgesehne radiale Schulter abstüzt, dadurch gekennzeichnet, dass es ein Rohr (10) aus metallischer Legierung umfasst, welches wenigstens in seinem an dem Feuerungsrohr (1) angrenzenden Teil im wesentlichem den selben Durchmesser wie das letztere hat und mit diesem Rohr innerhalb des vorgenannten rohrförmigen Elementes (7) axial fluchtet, und in welchem sich eine Leitung (27) zur Gaszufuhr zur Brennkammer (2) erstreckt, und dass das Zusammenfügungsmittel einen Magnet (50) aufweist, der an der Aussenfläche des Rohrs (10) an einer Stelle angeordnet ist, die nahe eines mit der Umhüllung des Brenners fest verbundenen metallischen Teil (23) ist, auf derjenigen Seite des Rohrs, die dem mit dem Feuerungsrohr (1) zusammenwirkenden Ende entgegensetzt ist, um eine axiale Anzugkraft zwischen diesem Magneten (50) und dem besagten metallischen Teil (23) zu erzeugen.

4. System nach einem der Ansprüche 1 bis 3, dadurch gekennzeichnet, dass das Feuerungsrohr (1) eine gewisse Anzahl von Luftzutrittsebenen (P1, P2, P3, P11, P12, P21, P22, P3) umfasst, welche in der Richtung der Strömung der verbrannten Gase axial vesetzt sind und der Gattung mit tangentialer gegenläufiger Lufteinführung, um eine gestufte Verbrennung zu erzeugen, um den Erzeugungsgrad von Stickstoffoxiden zu vermindern, wobei die in einem ersten Bereich von Zutrittsebenen (P1 ; P11, P12) etwa in der Höhe des Gaszutritts (28) liegende Luftzutritte angepasst sind, um eine unvollständige und wenig starke Verbrennung zu gewährleisten, wobei die in einem zweiten Bereich von Zutrittsebenen (P2, P21, P22) liegenden und gegenüber den Luftzutritten der ersten Ebene gegenläufige Luftzutritte angepasst sind, um die Verbrennung zu beschleunigen ohne dass das Luft-Gas Verhältnis den stöchiometrischen Wert erreicht, während die Luftzutritte in einem dritten Bereich (P3) angepasst sind, um die Verbrennung zu beenden.

5. System nach Anspruch 4, dadurch gekennzeichnet, das jede Luftzutrittsebene eine gewisse Anzahl von Löchern (35) aufweist, welche die Wendung des Feuerungsrohrs (1) durchsetzen und in einer zur Achse des Feuerungsrohrs (1) senkrecht stehenden Ebene tangential ausgerichtet sind, und dass die tangentialen Ausrichtungen der Löcher von einer Ebene zur anderen entgegengesetzt sind, wobei die Löcher einer Ebene in vorteilhafter Weise in Bezug auf die Löcher der benachbarten Ebenen winkelversetzt sind.

6. System nach einem der Ansprüche 4 oder 5, dadurch gekennzeichnet, dass sämtliche Luftzutrittslöcher (35) in das Innere der Brennkammer (2) münden.

7. System nach einem der Ansprüche 4 bis 6, dadurch gekennzeichnet, dass die dritte Luftzutrittsebene (P3) Löcher (36) aufweist, welche in der Nase des Brenners gebildet sind, um die Luft unmittelbar in die Flamme am Austritt (4) aus dem Brenner nach der Einschnürung (3) einzuspritzen, wobei diese Luft eine zusätzliche Kühlungswirkung auf die Nase des Brenners erzeugt.

8. System nach einem der vorangehenden Ansprüche, dadurch gekennzeichnet, dass der innerhalb der Brennkammer (2) liegende Teil des Gaszufuhrrohrs (27) eine gewisse Anzahl von radialen Oeffnungen (28) zum Austritt des Gases und die Zündungsmittel vorzusgweise der Hochspannungbauart aufweist, welche eine an der Leitung (27) angeschweisste Erdungselektrode umfassen, während die Hochspannungselektrode (30) in der Achse der Leitung (27) liegt.

9. System nach einem der vorangehenden Ansprüche, dadurch gekennzeichnet, dass die Brennkammer (2) auf der dem Austritt (4) der Gase entgegengesetzten Seite durch eine durchsichtige Scheibe (5) geschlossen ist, welche sich senkrecht zu der Achse des Feuerungsrohrs (1) erstreckt und das Sehen der Flamme durch Fenster (32) in der Umhüllung des Brenners, welche durchlässig für die ultravioletten Strahlen sind, ermöglicht.

10. System nach einem der vorangehenden Ansprüche, dadurch gekennzeichnet, dass der Brenner angepasst ist, um einen Brenner der Rückgewinnungsgattung zu bilden und eine äussere rohrförmige Hülle (12) aufweist, welche einen ringförmigen Raum um das rohrförmige Element (7) herum für die Abgasumwälzung nach deren Durchgang durch eine Heizvorrichtung bildet, welche in vorteilhafter Weise der Handschunfingersartigen Strahlungsrohrgattung mit Wiederumlauf ist.

11. System nach Anspruch 10, dadurch gekennzeichnet, dass das vorgenannte rohrförmige Element (7) durch ein, den Verbrennungsluftstrom und den Strom der im Gegenstrom zu diesem Luftstrom fliessenden verbrannten Gase trennendes Wärmetauschrohr in vorteilhafter Weise mit Rippen (1) gebildet ist.

12. System nach einem der Ansprüche 10 oder 11, dadurch gekennzeichnet, dass das Strahlungsrohr ein äusseres Umhüllungsrohr (12), dessen axiale Verlängerung die äussere rohrförmige Hülle des Brenners bildet und ein inneres in axialer Fortsetzung des Feuerungsrohrs (1) des Brenners liegendes inneres Rohr (38) aus Keramik umfasst, welches sich aus einer gewissen Anzahl von Rohrstücken zusammensetzt, welche durch eine nachgiebige Verbindung herstellende Gelenkmittel (39) axial verbunden sind.

13. System nach Anspruch 12, dadurch gekennzeichnet, dass die Rohrstücke (38) aneinander anstossend angeordnet sind und die besagten Gelenkmittel (39) in der Gestalt einer die Enden der zu verbindenden Rohrstücke (38) koaxial umgebenden Muffe (39) ausgebildet sind, deren radial innere Fläche in vorteilhafter Weise in der Mitte ihrer Länge einen radialen nach Innen vorstehenden ringförmigen Kragen (40) aufweist, der zwischen zwei Rohrstücken (38) eingreift und denselben Innendurchmesser wie dieses hat, während die beiderseits des Kragens (40) liegenden Teile der Innenfläche (41) in erweitender Weise zu den Enden der Muffe hin verlaufen, um einen Achsenversatzt der durch die Muffe (39) verbundenen Rohrstücken zu ermöglichen, wobei die letztere in vorteilhafter Weise Rippen (42) zu ihrer Zentrierung im Inneren des Umhüllungsrohrs (12) an ihrer Aussenfläche trägt.

14. System nach einem der Ansprüche 12 oder 13, dadurch gekennzeichnet, dass das innere Rohr (38) an seinen Enden Mittel wie radiale Rippen (43) zu seiner Zentrierung im Inneren des Umhüllungsrohrs (12) aufweist.

15. System nach einem der Ansprüche 12 bis 14, dadurch gekennzeichnet, dass das innere Rohr (38) an seinen Enden den Umlauf der Gase begünstigende Offnungen (44) aufweist.

16. System nach einem der Ansprüche 13 bis 15, dadurch gekennzeichnet, dass die Länge des axialen Uberlapungsbereiches einer Muffe (39) durch ein Rohrstück grösser als die Summe der axialen Spiele zwischen dem Rohr (38) und den angrenzenden Elementen und den verschiedenen Rohrstücken ist.

17. Rohr nach einem der Ansprüche 12 bis 16, dadurch gekennzeichnet, dass ein Rohrstück (38) einen Innenund Aussendurchmesser, der konstant über die ganze Axiallänge des Rohrstücks ist, aufweist.

18. System nach einem der vorangehenden Ansprüche, dadurch gekennzeichnet, dass die Leitung (27) zur Gaszufuhr zu der Brennkammer (2) an ihrem innerhalb der Brennkammer (2) liegenden Ende offen ist, um die Flamme ummittelbar von aussen her, selbst im Falle einer Verdunkelung der den Boden der Brennkammer (2) bildenden Wandung (5) überwachen zu können.

19. System nach Anspruch 18, dadurch gekennzeichnet, dass es Zündungsmittel umfasst, die in vorteilhafter Weise eine Hochspannungselektrode (30') aufweisen, die sich parallel zur Gaszufuhrleitung (27) in der Höhe des offenen Endes der letzteren im Inneren der Brennkammer (2) erstreckt, wobei die Erdungselektrode in vorteilhafter Weise durch die Leitung (27) gebildet wird.

## Claims

1. Burner system in particular with a high outlet velocity of the burnt gases, comprising a central hearth tube defining a combustion chamber in which is admitted the mixture of combustible gas and of combustion-supporting gas such as air, a tubular element coaxially surrounding said hearth tube while forming an annular space thereabout through which is flowing the combustion-supporting air to be admitted into the hearth tube, the latter exhibiting at its outlet end for the burnt gases a reduced portion to increase the outlet speed of the gases, in which system the hearth tube is made from thermomechanical ceramic, the tubular element comprises at its end located towards the gas outlet a radial restriction which, forms an axial and radial positioning abutment for the hearth tube, the assembly of the latter to the other component parts of the burner is effected under the effect of an assembly means susceptible of producing an axial pressure force under the impact of which the hearth tube bears upon the said abutment through a radial shoulder provided in its reduced portion, characterized in that it comprises a tube (10) of metallic alloy which has at least in its portion adjacent to the hearth tube (1) substantially the same diameter than the latter and is axially aligned with this tube inside of the aforesaid tubular element (7) and in which extends a duct (27) for feeding gas to the combustion chamber (2) and in that the assembly means is made in the shape of a spring (33) bearing with one end upon the free end of the extension tube (10) and with its other end upon another surface (20) perpendicular to the axis of the tube (10) inside of the envelope of the burner.

2. Burner system in particular with a high outlet velocity of the burnt gases, comprising a central hearth tube defining a combustion chamber in which is admitted the mixture of combustible gas and of combustion-supporting gas such as air, a tubular element coaxially surrounding the hearth tube while forming an annular space thereabout through which is flowing combustion-supporting air to be admitted into the hearth tube, the latter exhibiting at its outlet end for the burnt gases a reduced portion to increase the outlet speed of the gases, in which system the hearth tube is made from thermomechanical ceramic, the tubular element comprises at its end located towards the outlet of the gases a radial restriction which forms an axial and radial positioning stop for the hearth tube, the assembly of the latter to the other component parts of the burner is effected under the effect of an assembly means susceptible of producing an axial pressure force under the impact of which the hearth tube bears upon the said stop by a radial shoulder provided in its reduced portion, characterized in that it comprises a tube (10) of metallic alloy which has at least in its portion adjacent to the hearth tube (1) substantially the same diameter than the latter and is axially aligned with this tube, inside of the aforesaid tubular element (7) and in which extends a duct (27) for feeding gas to the combustion chamber (2) and in that the assembly means comprises two advantageously annular magnets (48, 49) one (48) of which is disposed on the tube (10) whereas the other one (49) is mounted on the envelope (20) of the burner opposite the magnet (48) in the axial direction of the burner so that the ends of the magnets having the same magnetic polarity be axially in confronting relationship to produce an axial repulsion force.

3. Burner system in particular with a great outlet velocity of the burnt gases, comprising a central hearth tube defining a combustion chamber in which is admitted the mixture of combustible gas and of combustion-supporting gas such as air, a tubular element coaxially surrounding the hearth tube while forming an annular space around the latter through which is flowing combustion-supporting air to be admitted into the hearth tube, the latter exhibiting at its egress end for the burnt gases a reduced portion to increase the outlet speed of the gases, in which system the hearth tube is made from thermomechanical ceramic, the tubular element comprises at its end located towards the egress of the gases a radial restriction which forms an axial and radial positioning stop for the hearth tube, the assembly of the latter to the other component parts of the burner is effected under the effect of an assembly means susceptible of producing an axial pressure force under the impact of which the hearth tube bears upon the said stop by a radial shoulder provided in its reduced portion, characterized in that it comprises a tube (10) of metallic alloy which has at least in its portion adjacent to the hearth tube (1) substantially the same diameter than the latter and is axially aligned with this tube, inside of the aforesaid tubular element (7) and in which extends a duct (27) for feeding gas to the combustion chamber (2) and in that the assembly means comprises a magnet (50) mounted onto the outer surface of the tube (10) at a place close to a metallic portion (23) solid with the envelope of the burner, on that side of the tube which is opposite to the end co-operating with the hearth tube (1) to produce an axial attraction force between this magnet (50) and the said metallic portion (23).

4. System according to one of claims 1 to 3, characterized in that the hearth tube (1) comprises a number of air feed planes (P1, P2, P3, P11, P12, P21, P22, P3) which are axially offset in the direction of flow of the burnt gases and of the type with tangential introduction of air in counter-rotating relationship so as to produce a staged combustion to reduce the rate of production of nitrogen oxides, the air feeds located in a first zone of feed planes (P1 ; P11, P12) substantially at a level of the gas feed (28) being adapted to ensure an incomplete and not very strong combustion, the air feeds located in a second zone of feed planes (P2 ; P21, P22) in counter-rotating relation to the air feeds of the first plane being adapted to accelerate the combustion without the air-to-gas ratio reaching the stoechiometric value whereas the air feeds in a third zone (P3) are adapted to terminate the combustion.

5. System according to claim 4, characterized in that each air feed plane comprises a number of holes (35) which extend through the wall of the hearth tube (1) and are oriented tangentially within a plane perpendicular to the axis of the hearth tube (1) and in that the tangential orientations of the holes are opposite from one plane to another one, the holes of one plane being advantageously angularly staggered with respect to the holes of the neighbouring planes.

6. System according to one of claims 4 to 6, characterized in that all the air feed holes (35) are opening into the inside of the combustion chamber (2).

7. System according to one of claims 4 to 7, characterized in that the third air feed plane (P3) comrises holes (36) which are formed in the nose of the burner so as to inject the air directly into the flame at the outlet (4) of the burner after the reduced portion (3), this air producing an additional effect of cooling the nose of the burner.

8. System according to one of the foregoing claims, characterized in that the portion of the gas feed tube (27), located inside of the combustion chamber (2), comprises a number of radial gas oulet ports (28) and the ignition means advantageously of the high voltage type which comprise an earthed electrode welded onto the duct (27) whereas the high voltage electrode (30) is located along the axis of the duct (27).

9. System according to one of the preceding claims, characterized in that the combustion chamber (2) is closed on the side opposite to the gas outlet (4) by a transparent disc (5) which extends perpendicularly to the axis of the hearth tube (1) and permits the view of the flame through windows (32) in the envelope of the burner which are transparent to the ultraviolet radiations.

10. System according to one of the foregoing claims, characterized in that the burner is adapted to constitute a regenerative-type burner and comprises an outer tubular envelope (12) which forms an annular space around the tubular element (7) for the recirculation of the burnt gases after their passage through a heating device, advantageously of the glove finger-shaped radiant tube type with recirculation.

11. System according to claim 10, characterized in that the aforesaid tubular element (7) is constituted by a heat exchanger tube advantageously with fins (11) separating the flow of combustion air and the burnt gases circulating in counter-current relation to this air flow.

12. System according to one of claims 10 or 11, characterized in that the radiant tube comprises an outer envelope tube (12) the axial extension of which forms the outer tubular envelope of the burner and an inner ceramic tube (38) located in axial extension of the hearth tube (1) of the burner and consisting of a number of sections axially connected by articulation means (39) providing a flexible connection.

13. System according to claim 12, characterized in that the tube sections (38) are disposed end-to-end and the said articulation means (39) are made in the shape of a sleeve (39) coaxially surrounding the ends of sections (38) to be connected and the radially inner surface of which advantageously comprises in the middle of its length a radially inwards projecting collar (40) which extends between two tube sections (38) while having the same inner diameter as the latter whereas the inner surface portions (41) located on either side of the collar (40) are enlargening towards the ends of the sleeve so as to permit an axial offset of the tube sections connected by the sleeve (39), the latter advantageously carrying on its outer surface ribs (42) for its centering inside of the envelope tube (12).

14. System according to one of claims 12 or 13, characterized in that the inner tube (38) comprises at its ends means for its centering inside of the envelope tube (12) such as radial ribs (43).

15. System according to one of claims 12 to 14, characterized in that the inner tube (38) comprises at its ends ears (44) promoting the circulation of the gases.

16. System according to one of claims 13 to 15, characterized in that the length of the axial overlapping zone of a tube section, of a sleeve (39) is greater than the sum of the axial plays between the tube (38) and the adjacent elements and the different sections.

17. Tube according to one of claims 12 to 16, characterized in that one section of the tube (38) exhibits an inner and outer diameter which is constant throughout the axial length of the section.

18. System according to one of the preceding claims, characterized in that the duct (27) for feeding gas to the combustion chamber (2) is open at its end inside of the combustion chamber (2) so that the flame may be directly controlled from the outside, even in case of a darkening of the wall (5) forming the bottom of the combustion chamber (2).

19. System according to claim 18, characterized in that it comprises ignition means which advantageously include a high voltage electrode (30') which extends in parallel relation to the gas feed duct (27) at the level of the open end of the latter, inside of the combustion chamber (2), the earthed electrode being advantageously formed of the duct (27).

Fig. 1

Fig. 2

Fig. 3

EP 0 296 032 B1

*Fig. 3*

*Fig. 4*

*Fig. 5*

Fig.6

Fig.7

Fig.8

Fig. 10

EP 0 296 032 B1